# EUROPEAN PATENT SPECIFICATION

(11) **EP 0 729 240 B1**
(45) Date of publication and mention of the grant of the patent: **24.10.2001**
(21) Application number: 96100135.1
(22) Date of filing: 08.01.1996
(51) Int. Cl.: H04B 1/69, H04B 7/26, H04B 1/707

(54) **Code division multiple access cellular mobile radio systems**
Zellulares Kodevielfachzugriffsmobilfunksystem
Systèmes de radio mobile cellulaire à accès multiple par répartition de code

(30) Priority: 24.02.1995 GB 9500616
(43) Date of publication of application: 28.08.1996
(73) Proprietor: ROKE MANOR RESEARCH LIMITED, Romsey, Hampshire, SO51 0ZN (GB)
(72) Inventor: Hulbert, Anthony Peter, Shirley, Southampton SO15 5AN (GB)
(74) Representative: Allen, Derek

(56) References cited:
- EP-A- 0 600 713
- US-A- 5 020 056
- US-A- 5 313 457
- HULBERT A P: "Chip TDM-A new orthogonal downlink transmission technique for CDMA cellular mobile radio" SIXTH IEEE INTERNATIONAL SYMPOSIUM ON PERSONAL, INDOOR AND MOBILE RADIO COMMUNICATIONS. PIMRC'95. WIRELESS: MERGING ONTO THE INFORMATION SUPERHIGHWAY (CAT. NO.95TH8135), PROCEEDINGS OF 6TH INTERNATIONAL SYMPOSIUM ON PERSONAL, INDOOR AND MOBILE RADIO , pages 718-722 vol.2, XP002113897 1995, New York, NY, USA, IEEE, USAISBN: 0-7803-3002-1
- RUPRECHT J ET AL: "CODE TIME DIVISION MULTIPLE ACCESS: AN INDOOR CELLULAR SYSTEM" FROM PIONEERS TO THE 21ST. CENTURY, DENVER, MAY 10 - 13, 1992, vol. 2, no. CONF. 42, 10 May 1992 (1992-05-10), pages 736-739, XP000339889 INSTITUTE OF ELECTRICAL AND ELECTRONICS ENGINEERSISBN: 0-7803-0673-2

## Description

This invention relates to code division multiple access (CDMA) cellular mobile radio systems and in particular to the downlink and the need to transmit signals contemporaneously to one or more mobile terminals from a base station transmitter site.

Existing systems use a transmission which consists of several spread spectrum signals added together and may use orthogonal codes to provide reduced interference between the different signals. This has a disadvantage that the sum of these many different signals has a large ratio between the peak transmitted power and the average transmitted power, typically this will tend to a Rayleigh distributed envelope for a large number of signals. Also, any mobile terminal requiring to demodulate a signal for wideband data will need simultaneously to demodulate several of these orthogonal codes. Thus, for example, if the basic rate for one of the orthogonal codes were eight kilobits per second and a particular mobile terminal required a service running at sixty-four kilobits per second the mobile terminal would need to demodulate eight codes simultaneously.

The aim of this invention is to solve the two previous problems with advantages in complexity and transmitted envelope power whilst retaining orthogonal code structure and enabling a simplified receiver in the mobile terminal.

EP-A-0 600 713 discloses a method for radio telephone communication in which respective groups of radio telephone users are assigned one of a plurality of orthogonal radio telephone communications channels and one of a plurality of mutually orthogonal spreading codes. According to the present invention, there is provided a CDMA cellular mobile radio system comprising at least one base station and at least one mobile terminal arranged to communicate with said at least one base station over a radio medium, the base station including a transmitter for transmitting transmissions to said at least one mobile terminal, said transmissions comprising serially transmitted chips in time division multiplex fashion which are time separated and therefore inherently orthogonal thereby eliminating mutual interference; characterised in that the transmitter serially transmits chips to different mobile terminals which are time scrambled within a bit period.

According to a further aspect of the invention, some of the transmissions are in the form of binary phase shift keying signals on an inphase component of the signal, and other transmissions occur on a quadrature phase component of the signal.

According to a further aspect of the invention, a pilot signal is transmitted by sending some chips in a sub frame as known chips so that they can be despread in known fashion to attain a channel estimate.

According to a further aspect of the invention, power control is provided by means which arrange for some links to have a variable number of chips per bit which vary in time, the variation serving as power control.

Very simple elements of the present invention will now be described with reference to the accompanying drawings wherein;
FIGURE 1 shows a simple deployment of mobile units in communication with a base station,
FIGURE 2a shows a channel impulse response for path 1 for a channel,
FIGURE 2b shows the combined receiver response,
FIGURE 3a shows a channel impulse response for path 2 for a channel,
FIGURE 3b shows the combined receiver response,
FIGURE 4 shows a first transmitter pattern,
FIGURE 5 shows a first pattern for a Rake processor output in respect of a first mobile unit,
FIGURE 6 shows a first pattern for a Rake processor output in respect of a second mobile unit,
FIGURE 7 shows a second transmit pattern,
FIGURE 8 shows a second pattern for a Rake processor in respect of first mobile,
FIGURE 9 shows a second pattern for a Rake processor output in respect of the second mobile unit,
FIGURE 10 shows a third transmit pattern,
FIGURE 11 shows a third pattern for a Rake processor output in respect of the first mobile,
FIGURE 12 shows a third pattern for a rake processor output in respect of the second mobile unit,
FIGURE 13 shows a pilot chip pattern,
FIGURE 14 shows a channel impulse response,
FIGURE 15 shows a receiver response,
FIGURE 16 shows a block diagram of a chip TDM real pilot matched filter,
FIGURE17 shows a block diagram of a chip TDM fully complex pilot matched filter,
FIGURE 18 shows a logic block diagram for the control of a correlator,
FIGURE 19 shows a block diagram for a selector as used in respect of Figure 18,
FIGURE 20 shows a block diagram of a combiner/despreader,
FIGURE 21 shows a bit chip sequence and latch writing operations, and
FIGURE 22 shows a block diagram of a multiple adder/subtractor circuit.

In chip time division multiplex (TDM), a chip is defined as a signalling element of which n together comprise one bit. For a given signal, the chips are not, in general, adjacent to one another, and therefore the number of chips in a bit is no longer the same as the band width expansion factor which is now equal to the number of chips which could be fitted in the period of a bit for a given chip duration.

In spread spectrum signals, each data bit is transmitted by a pseudo random sequence consisting of many so called chips where n chips transmit one bit, where n is the bandwidth expansion factor.

The present invention utilises chip time division multiplex and the basic scheme involves a base station transmitter which serially transmits chips to different mobile terminals in a time scrambled order. Thus in an example implementation of the system, a basic frame which would consist of a period of transmission of one bit at the lowest bit rate and the transmission of each of the signals at the lowest bit rate might consist for example of four chips thus, if the spreading factor were say one hundred and twenty-eight, thirty-two users would each transmit with a chip rate of four chips within a one bit period. The transmissions are time separated and therefore they are inherently orthogonal, so mutual interference in the absence of multiple propagations is eliminated. It may be a requirement on the downlink of such a system to apply independent power control to the signals transmitted to the different users but this is readily facilitated since there is no difficulty in changing the power to transmit for any given chip since a linear amplifier will be required.

In order that the interference to mobile terminals receiving signals from another base station may be shared equally amongst those mobile terminals, it is proposed to apply a time scrambling of the assignment of the chips to the different mobile terminals within the frame in order that no mobile terminal may consistently receive interference from the chips that are being transmitted at high power to another particular mobile terminal, but that rather for any given signal the interference will always consist of a mixture of signals transmitted at high power and signals transmitted at low power. One possible implementation of this system would involve dividing the basic frame for example for the case of four chips into four subframes and scrambling the chips within the subframes for each of the users. Thus for every link one chip would be transmitted within each subframe in some arbitrary scrambled order, and then in the next subframe the next chip, and by the time the fourth subframe had been complete four chips would have been transmitted. The scrambling can be achieved in a manner familiar to those versed in the art, however, for practical purposes it may be simpler to pre compute a set (a suitable subset of all possible scrambling matrices) of scrambling matrices and store them in a read only memory device. A pseudo random sequence is used to address the table in both the base station which generates the transmitted signal and each of the mobile terminals which receive the signal in synchronism so that in any subframe the transmitter and each of the mobile terminals access the same scrambling table. Any given mobile terminal may then use the correct element of the scrambling table to select the chip that is pertinent to its own requirements for reception.

Another aspect of this invention is the transmission of a number, typically half of the signals using binary phase shift keying, on the inphase component of the signal, and another number on the quadrature component of the signal. The inphase and the quadrature components may or may not use the same chip randomising table.

Frequently it is a requirement for these systems to incorporate a transmitted pilot. This can also be achieved by sending certain of the chips within each subframe as known chips so that they can be despread in a known fashion in order to attain a channel estimate.

A further embodiment of this invention is to arrange for certain of the links to have a variable number of chips, available in each, but slowly time varying, and making this variation serve as a form of power control so that those mobile terminals which were a long distance away from the base station would have more chips per bit than those mobile terminals which were very close to the base station. Indeed it would be conceivable to have links with no spreading factor at all, one chip per bit for those mobile terminals very close to the base station.

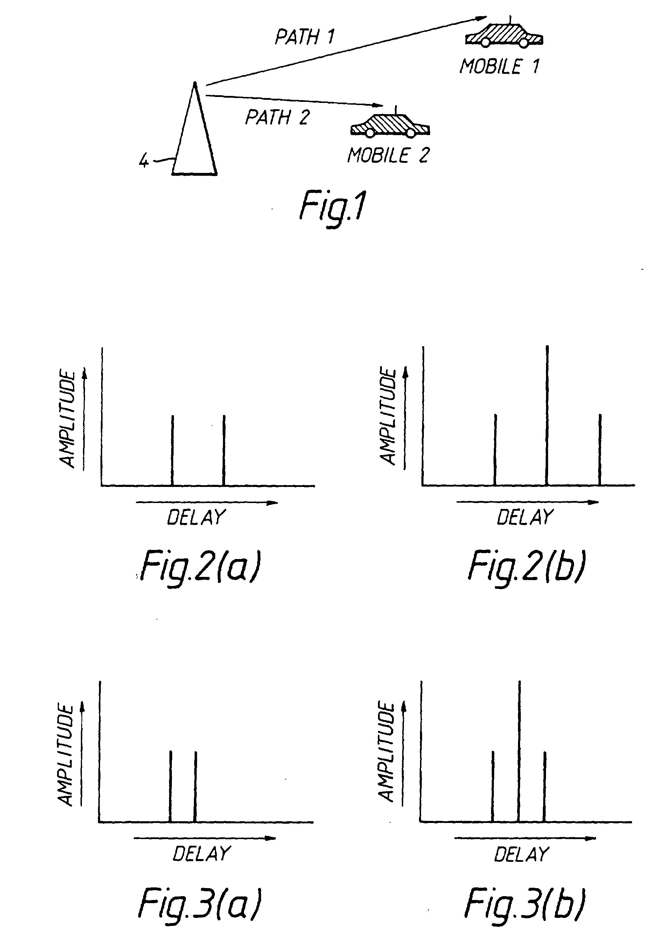

Referring to Figure 1, a base station 4 transmitting to a pair of users over multipath paths 1 and 2 is shown. As an example, the multipath channel for path 1 is shown in Figure 2a.

Referring to Figure 2a and 2b, a very simple case of equal. amplitude and zero phase shift paths is assumed. Given an optimum Rake receiver, the combined impulse response of the channel and the Rake processor will be as Figure 2b. Similarly for the other path, the responses are shown in Figure 3a and Figure 3b.

Referring to Figure 3a and 3b, the delay spread is reduced as might be expected for a shorter radio path.

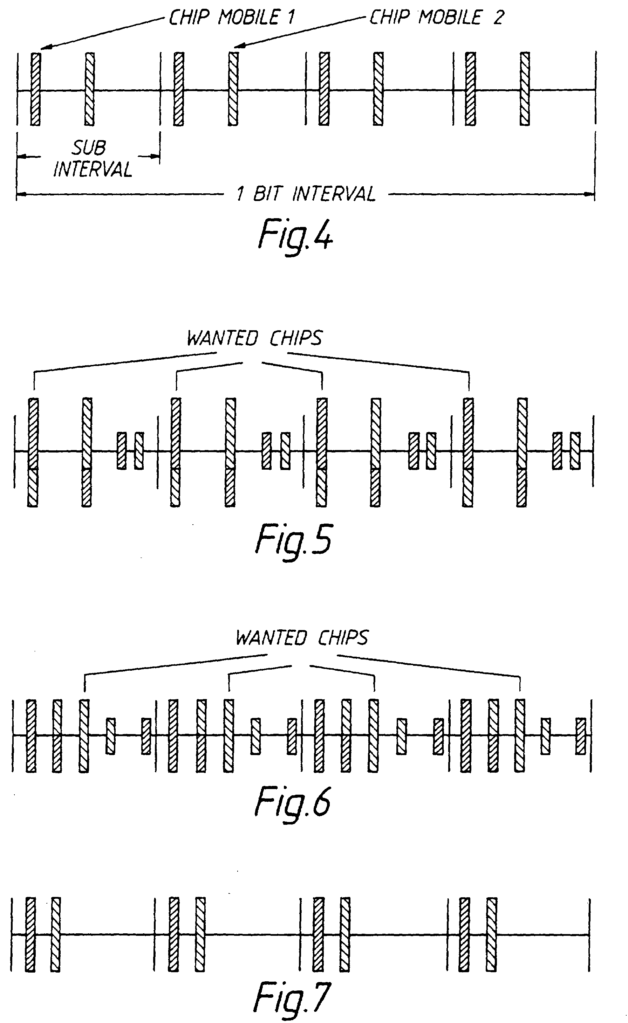

Consider a chip time interleaved transmission with a spreading factor of four. Each bit is divided into four sub intervals. The transmission pattern for a bit might appear as shown in Figure 4.

Referring to Figure 4, the patterning of each chip corresponds to that of the mobile to which it is being sent. In a regular interleaving pattern, the gaps might correspond to transmissions to other mobiles (not shown).

Consider now the reception at mobile 1 over path 1. The signal at the output of the rake processor for mobiles 1 and 2 will be the convolution of the pattern in Figure 4 with the impulse responses of Figures 2b and 3b respectively. The response for mobile 1 is shown in Figure 5.

Referring to Figure 5, here it is seen that the effect of multipath is to create interchip interference, in that the unwanted chips are overlaid at half amplitude onto the wanted chips.

Consider now mobile 2. The response is shown in Figure 6. Here there is no interchip interference since the unwanted chips do not overlay the wanted chip positions.

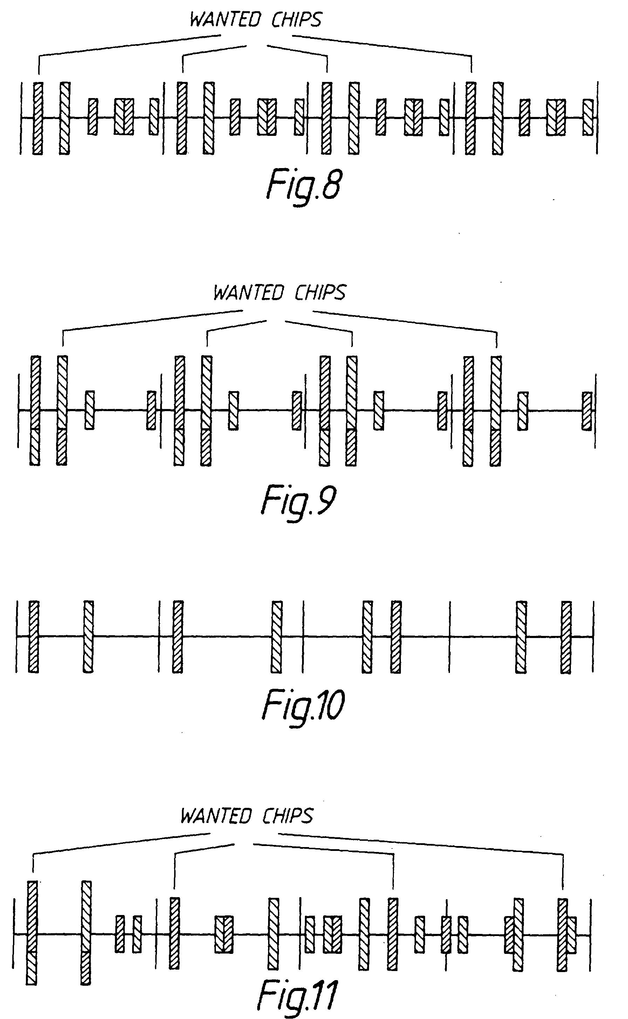

It might be thought that a different transmit pattern could alleviate the problem. An alternative is shown in Figure 7. Referring to Figure 7, the convolution of this with the channel for mobile 1 is shown in Figure 8.

Referring to Figure 8, there is no interchip interference for mobile 1. However, examination of the response for mobile 2 (Figure 9) shows that this now suffers from interchip interference.

Referring to Figure 9, it is of course, possible, for the above case, to construct a pattern for which neither mobile suffers interchip interference. However, the above illustrates the difficulty of satisfying the requirements for zero interchip interference simultaneously for the simple case of two mobiles with two path multipath. The general situation is far more complicated than this, involving many mobiles and, in general, more than two multipath components. In many cases, complete orthogonality could not be achieved even with perfect information and an ideal algorithm for generation of the transmission pattern. It should be possible, in principle, to achieve some optimal minimum interference state. However to achieve even this, the base station would need to be informed of the multipath profiles regularly by every mobile before constructing the transmission pattern and communicating its structure back to those mobiles. With rapidly changing multipath this becomes impractical with signalling overheads greatly exceeding any capacity benefit.

The alternative as mentioned earlier is to apply pseudo random scrambling (known to the mobiles) to the positions of the chips. This is illustrated in Figure 10.

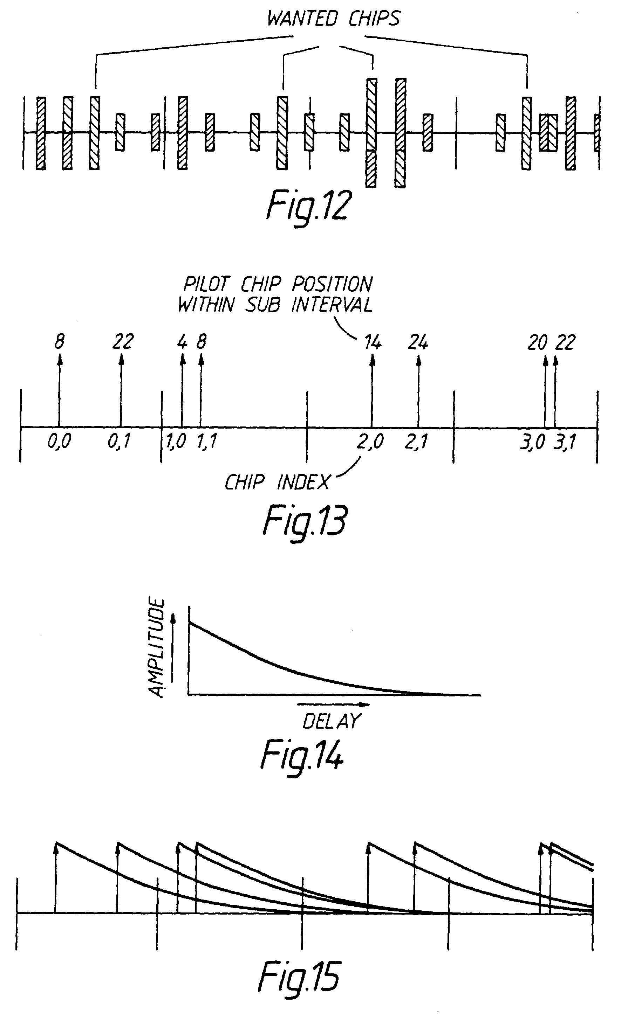

Referring to Figure 10, for this pattern the receiver Rake response for mobile 1 is as shown in Figure 11.

Referring to Figure 11, only the first wanted chip experiences interchip interference. Thus, after despreading, the mean interference has been reduced fourfold (in addition to the fourfold benefit due to processing gain). The Rake response for mobile 2 is as shown in Figure 12.

Referring to Figure 12, in this case, only the third wanted chip experiences interchip interference, affording the same benefit as for mobile 1.

Thus we see that the effect of randomisation is to "share out" the effects of interchip interference. It might appear that randomisation of only the timing would be necessary with the actual order of the chips to the different users kept fixed. This would be true if all signals were transmitted at the same power. However, if downlink power control is applied then the amplitudes of the various chips will vary. It then becomes important to avoid, for example, regular interference between strong and weak chips. This is achieved provided that the chip orders are scrambled.

In the same way as for existing downlink spread spectrum concepts, the transmission of a downlink pilot is advantageous to Chip TDM for synchronisation and for channel estimation purposes. The pilot signal is implemented as additional chips with randomising code but with no modulation, scrambled in amongst the data chips. It is necessary to correlate against these pilot chip sequences for a range of delays in order to obtain the complete channel impulse response over the delay spread of the channel. A proposed implementation is described by way of example:-

Consider a chip TDM system with a bit rate of thirty-two kbps and a chip period of 1/f_{C} where f_{C} = 4.096 MHz. There are thus one hundred and twenty-eight chip slots per bit. If the spreading factor is four then there are four sub intervals per bit and thirty-two available chip slots per sub interval. Suppose two pilot chips are transmitted per sub interval (this gives the pilot more energy than the base rate signals and is advantageous). A bit interval lasts thirty one *µ* secs. Ideally the pilot matched filter should be able to handle a delay spread of about fifteen *µ* secs. Thus the delay spread covers two sub intervals. This means that, at any given time, the chips transmitted over two sub intervals can influence any received sample. However, because of the randomisation of chip timings within the sub intervals, three sub intervals must be considered at any given time.

Referring to Figure 13, consider the pattern of transmitted pilot chips shown therein, (other traffic chips will also be transmitted but are not shown).

The chips are indexed i, j, where i the sub interval number and j is the pilot chip number within the sub interval. The number at the top is the time position within the sub interval. Thus, for example, the chip labelled 2, 1 is the second pilot chip (zero reference) in the third sub interval and occupies the 24th available slot within his sub interval.

Suppose, now that the pilot chip signal is received at a particular mobile over the (stylised) channel impulse response shown in Figure 14. The basic propagation delay is normalised to zero. This merely implies that a synchronisation process in the receiver has already removed this delay. In this case the received signal will be convolution of the pilot chip pattern with the impulse response as illustrated in Figure 15.

Referring to Figure 15, note that the responses to the individual chips are not shown added together in the diagram since the randomising sequence on the pilot chips would introduce random additions and subtractions. Note, also, that in reality the current bit would also include the impulse response tails from pilot chips transmitted in the previous bit period. These are omitted for clarity.

Assume that the receiver samples its input once per chip. The first sample of the first sub interval (sample 0,0) contains no response to the chips of that subframe. However, in the general case, this cannot be guaranteed. If the randomising algorithm had assigned a pilot chip to position zero within that subframe then a response would have arisen. Thus, from the start of any sub interval there are potentially responses to pilot chips within it. Assume that, at the start of a sub interval, the receiver has computed the positions of the pilot chips within it from the randomising algorithm. The delay associated with the first sample in the sub interval with respect to a pilot chip at position n will be -n. ie the chip has not yet arrived (except for the case, n=0, in which case the delay is zero). The delay associated with sample m in the first sub interval for a chip at position n will be m-n. Thus, when m=n the chip provides a zero delay response. Suppose the pilot matched filter includes a set of sixty-four memory locations, corresponding to the impulse response at delays zero to sixty-three. When, m-n=0, the zeroth memory location should be either incremented or decremented by the received sample, depending upon the polarity of the chip transmitted. At the next sample, m-n=1 so the same operation should be applied to the 1 indexed memory location. This can be viewed, alternatively in the following way.

Step 1. At the start of a sub interval, the positions and polarities of the chips within that sub interval are made available (the whole of the previous sub interval is available to do this).

Step 2. For each of the pilot chips within the sub interval, a counter is initialised at -n where n is the chip position within the sub interval.

Step 3. For each counter:- If the counter value is negative do nothing; otherwise increment/decrement (depending on the chip polarity) the memory location addressed by the counter with the sample value.

Step 4 For each new sample:- Increment the counters by one. If the count has reached sixty-four do nothing; otherwise repeat form step 3.

The question remains how/when do deallocate counters. Examination of Figure 15 shows that the response to a particular chip, in general, occupies three sub intervals. Thus a counter allocated at the start of sub interval zero can be de-allocated at the start of sub interval three - ie counters remain active over three sub intervals of course, once a counter reaches sixty-three it can be de-activated (eg to save power) but it will not be reallocated until the start of the following sub interval.

Thus, we see that for the (realistic) example described, six such counters will be required and, on average, four additions/subtractions will take place every sample, with a maximum of six and a minimum of two. An equivalent conventional system would require sixty-four additions/subtractions per sample (because every sample is a potential response to pilot chips from over the entire delay spread). Thus, the saving for chip TDM is very considerable.

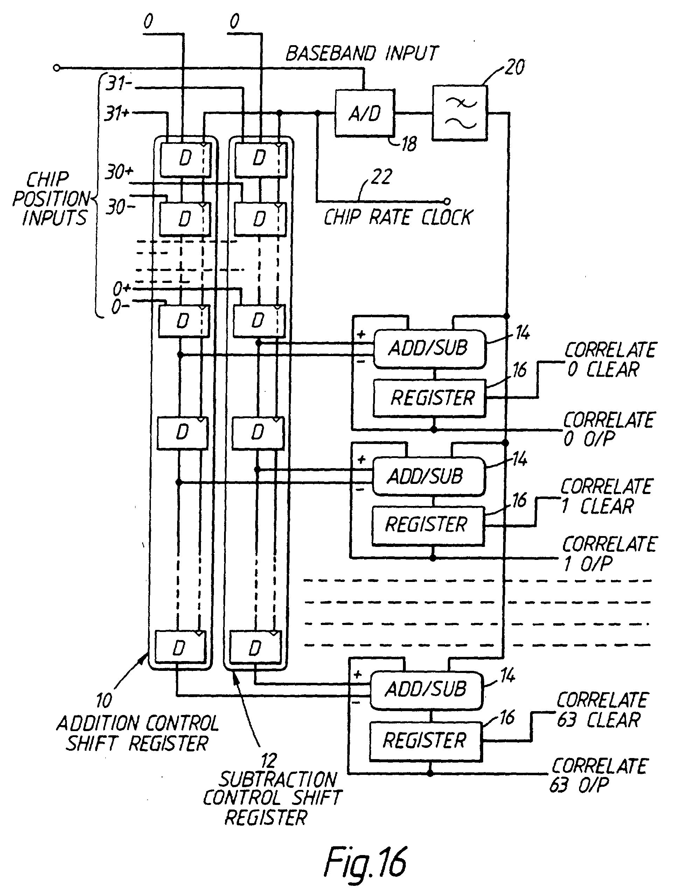

In spite of this saving, in a digital signal processor architecture, the above operations are rather complicated, requiring many clock cycles per chip sample. However, the gate array architecture shown in Figure 16 can handle a chip sample in a single clock cycle whilst having very low power consumption.

Referring to Figure 16, the hardware implementation for a chip TDM real pilot matched filter is shown. It comprises an addition control shift register 10 and a subtraction control shift register 12. The input designated plus and minus 0 to plus and minus 31 show the chip position inputs. Each correlation position has an adder/subtractor 14 associated with it. The analogue to digital converter 18 is driven at the chip rate clock provided at an input line 22. This chip rate clock is also applied to an input of the shift registers 10, 12. Each register 16 associated with each adder/subtractor 14 has its output connected back to an input of the adder/subtractor 14 and also generates the particular correlate output for the correlator position.

An adder/subtractor is associated with each correlation output register. This may seem a significant overhead but in fact is acceptable for two reasons:-

The precision of the chip samples is only four bits and only about sixteen samples will be correlated before reading out and resetting to zero. This represents an important further saving in chip TDM, the smaller correlation length leads to shorter word lengths. Thus only eight bits precision is needed for the adder/subtractors. In fact, allowing for the gates in the registers themselves, the add/subtractors only roughly double the gate count in this area.

Although the gates are present for additions/subtraction in all sixty-four correlation registers, on average, only four additions/subtraction take place for every sample. A CMOS implementation will therefore have very low power consumption.

The architecture can perform the pilot matched filtering with a single clock running at the chip rate.

In this architecture, the control of the additions/subtractions is more implicit than in the DSP approach. At the start of each sub interval, the positions of the two pilot chips are computed. For both cases, if the chip is a one the corresponding position in the Chip Position Inputs for a + is set high, otherwise the position for a - is set high. Otherwise the '0's at the head of the shift registers are clocked through. Thus, at the start of a sub interval, the first thirty-two positions of the shift registers will contain all zeros except that for the positions corresponding to chip positions within the sub interval, one or the other, depending on the chip polarity will contain a "1".

If there is a pilot chip in position zero, this will cause the current sample either to be added or subtracted (depending on the polarity of the pilot chip) from the register for correlation output 0. One clock cycle later, the new '1' will have shifted down through the addition/subtraction control shift register, causing the new sample to be added or subtracted (same operation as before) from the register for correlation output 1 and so on. A pilot chip in position n will have to wait n clock cycles before it causes an addition/subtraction to register 0. Sixty-three clock cycles after the first addition/subtraction for a sample, the control entry for a given pilot chip "falls" off the end of the shift register and has no further effect.

The above description has been given for a single simple real correlation for ease of explanation. However, the real requirement is for a full complex correlation. This is because some pilot chips will be transmitted on the I channel and some on the Q channel and because the channel itself has arbitrary phase shifts for the various paths. Ordinarily this would require some four times the complexity. However, by careful design, the complexity can be held to barely more than double that of the real correlator.

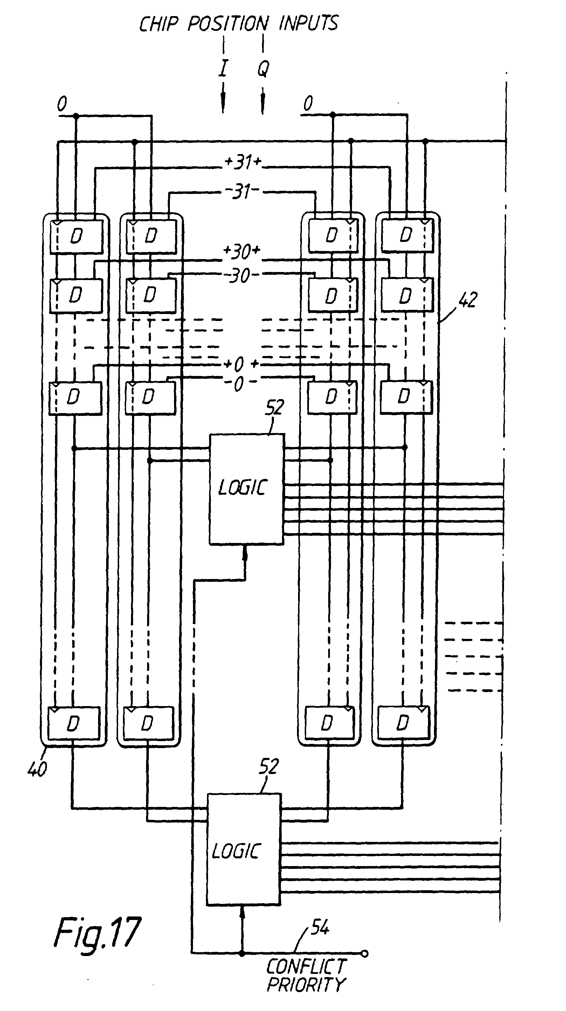

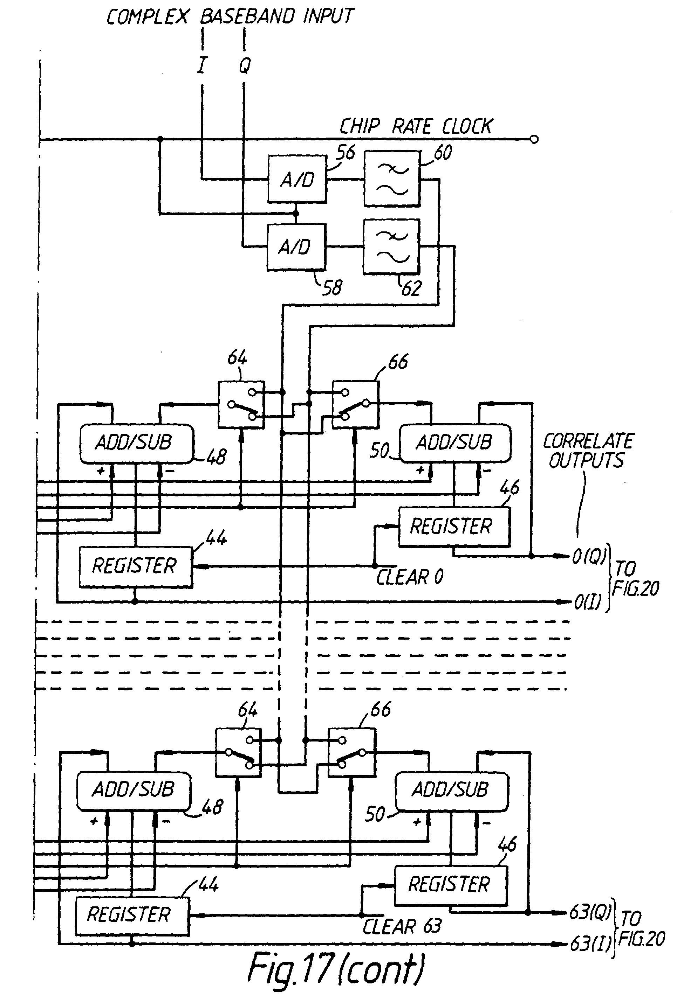

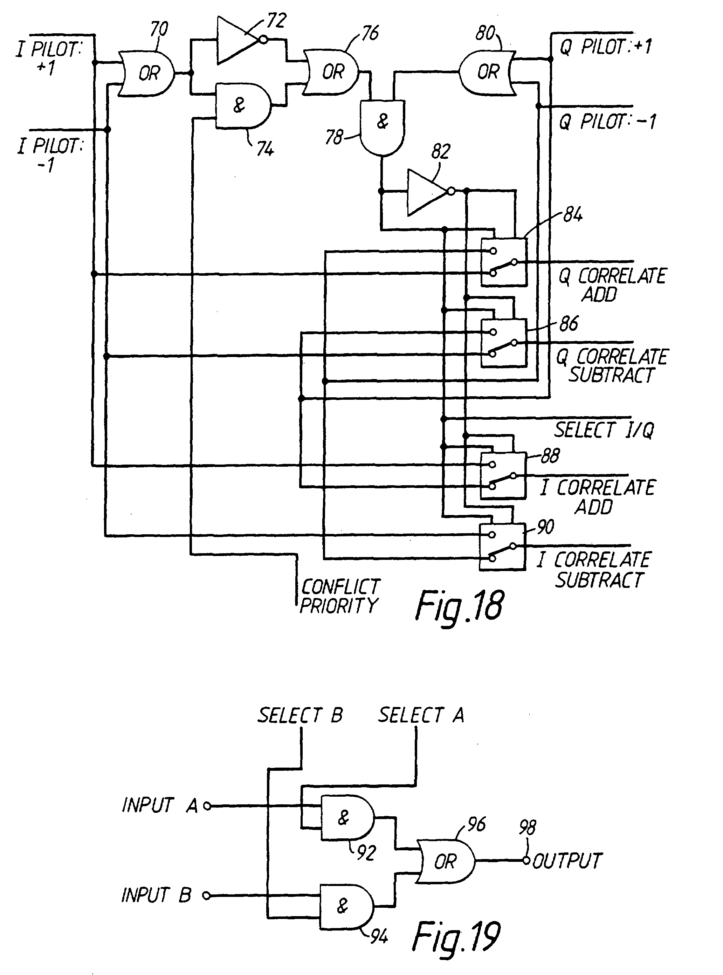

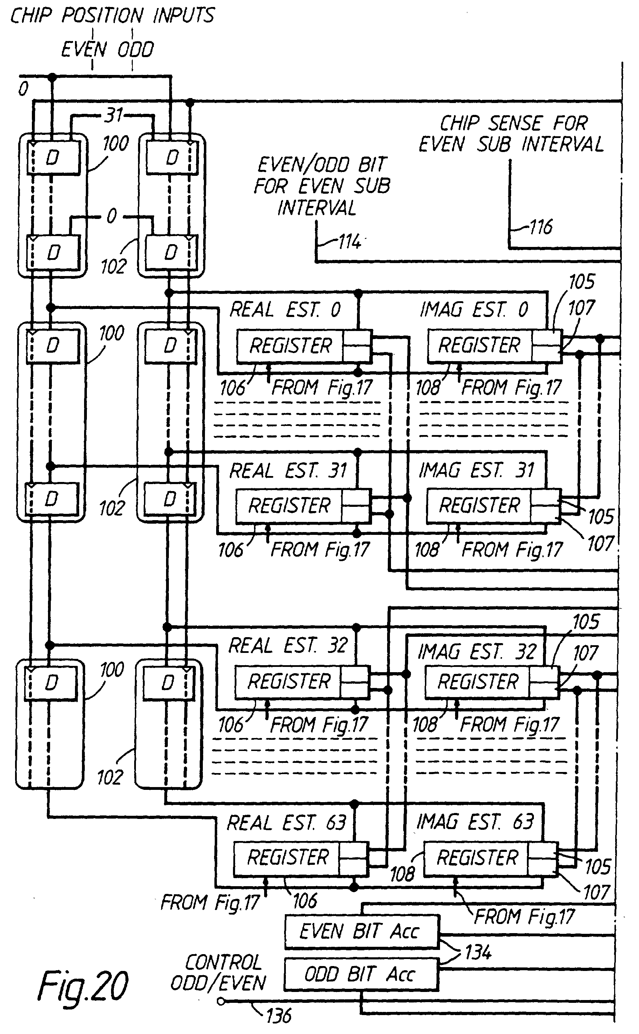

A possible architecture is shown in Figure 17. There are now two pairs of addition/subtraction control registers 40, 42 one pair 40 containing '1's in the pilot chip positions of the I code, the other 42 for the Q code. There are also two registers and adder subtractors (one for the I output, one for the Q output) for each correlator. The output of the shift registers are applied to a logic circuit 52 which control whether the I or Q signal is added or subtracted from the I and Q correlator registers respectively. Note, that because there is only one adder/subtractor for each correlator register, it is not possible to add in contributions from chips transmitted simultaneously on the I channel and on the Q channel. It may be possible to design the chip randomising function so that this never happens. Otherwise, the correlator will add in the contribution form either the I channel chip or the Q channel chip, depending on the state of the "Conflict Priority" line 54. For "fair" sharing of the lost chips, this line can be toggled high and low from one sub interval to the next.

For each I and Q channel there is a analogue to digital converter 56, 58 each connected to a band pass filter 60, 62 respectively. The output from the band pass filters 60, 62 are connected to various inputs of the selection circuit 64, 66 and operated to determine which output from which filter 60, 62 is connected to the respective adder/subtractor circuit 48, 50.

The logic circuits 52 shown in Figure 17, will now be described with reference to Figure 18, and Figure 19 which shows the logic diagram for a selector as used in Figure 18.

Referring to Figure 18, the control circuit comprises an OR-gate 70 having two inputs one of each is connected to the positive and negative imaginary pilot signal in respect of bit position one. The output of the OR-gate 70 is connected to an input of an inverter 72 and to an input of an AND-gate 74. The output of the inverter 72 and the AND-gate 74 are connected to respective inputs of an OR-gate 76, the output of which is connected is to an input of an AND-gate 78. An OR-gate 80 has two inputs each of which is connected to a positive and negative Q pilot signals in respect of the first bit, and the output of the OR-gate 80 is connected to a further input of the AND-gate 78. An output of the AND-gate 78 is connected to an inverter 82 and to respective inputs of selectors 84, 86, 88 and 90. The output of the AND-gate 78 is connected to further inputs of the selectors 84, 86, 88 and 90. The positive I pilot signal is connected to a further input of the selector 84 and the selector 88, and the negative pilot signal is connected to a further input of the selector 86 and to the selector 90. Similarly the positive Q pilot signal is connected to a further input of the selector 86 and to the selector 88 and the negative Q pilot signal is connected to an input of the selector 84 and to the selector 90. A conflict priority signal is applied to a further input AND-gate 74.

The output of the selector 84 causes the output of the Q correlator to be added. The output of the selector 86 causes the output of the Q correlator to be subtracted. The output of the correlator 88 causes the output of the I correlator to be added. The output of the selector 90 causes the output of the I correlator to be subtracted. The output of the AND-gate 78 is also used to control the selector shown in Figure 17, designated 64, 66 which causes the particular I or Q channel to be selected.

Referring now to Figure 19, a selector will now be described. The selector comprises an AND-gate 92, and an AND-gate 94, the outputs of which are connected to respective inputs of an OR-gate 96. The inputs to the AND-gate 92 receives at a first input thereof a first input signal A and as a second input thereof a select signal. Similarly the AND-gate 94 at a first input thereof receives an input signal B and a second input thereof a select signal. An output signal is generated on the output line 98 from the OR-gate 96.

It will appreciated that the circuitry described in Figures 18 and 19 represent known logic circuitry the operation of which will be well known to those conversed in the art.

It will be appreciated that the description to Figures 18 and 19 have been in respect of a single bit position, and this circuitry will be repeated for each bit position of which there are thirty-two in total.

The optimum architecture for a Rake combiner/despreader will depend upon the application, and therefore the bit rate of the terminal. The most cost sensitive application is likely to be voice only terminals supporting only the bit rate associated with one set of chips per bit period. Therefore, operations complimentary to those in the pilot chip matched filter are possible in the Rake combiner/despreader, to achieve significant reductions in complexity.

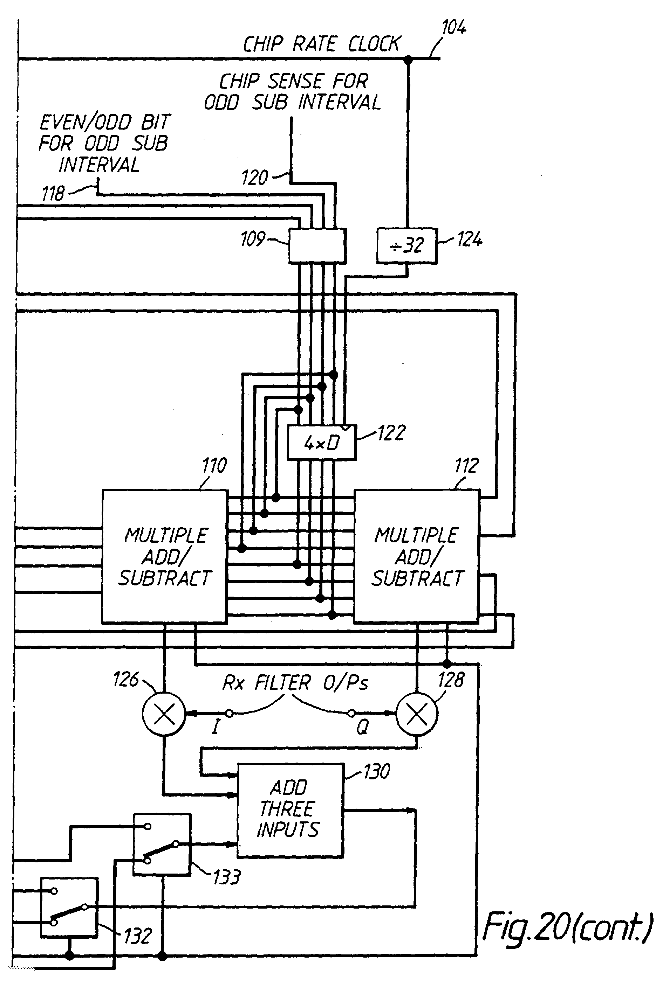

The architecture shown in Figure 20 is based on the fact that the signal component of any received sample (sampling of the chip rate) is a combination of the delayed responses from various transmitted chips. These chips will usually all relate to a single transmitted bit although, near the boundary between bits, a sample may contain long delayed chips from the end of one bit as well as moderately delayed chips from the beginning of the next bit. Thus for the general case two bits must be considered at a time, more than two bits would only arise if the bit rates were greater than the reciprocal of the delay spread, and this would be unlikely for voice terminals.

Referring to Figure 20, the control shift registers 100, 102 are arranged to receive the chip position inputs, the shift register 100 handling the even positions and the shift register 102 handling the odd positions. The shift registers are driven by the chip clock rate via line 104. A bank of registers 106 are connected to the various bit positions of the control registers 100, 102 and are arranged to store the real channel estimates. Similarly a bank of shift registers 108 are connected to the respective bit positions of the control registers 100, 102 and are used to store the imaginary channel estimates. Output signals from the bank of shift registers 106 are connected to an input of a multiple add/subtract circuit 110, and the outputs from the bank of shift register 108 are connected to the inputs of a multiple add/subtract circuit 112 via an upper bus driver 105, and a lower bus driver 107. The add/subtract circuits 110, 112 receive a plurality of control signals via lines 114, 116, 118 and 120 via latch circuits 109. On line 114 is a signal representing an even/odd bit when an even sub interval. On line 116 is a signal representing the chip sense for the even sub interval. On line 118 is a signal representing an even/odd bit for an odd sub interval. On line 120 a signal representing a chip sense for an odd sub interval. Modified versions of these signals are also passed to the multiple add/subtract circuits 110, 112 via the circuit 122 which is driven from the chip rate clock via line 104, via a divider circuit 124.

The outputs from the multiple add/subtract circuits 110, 112 are passed to combiner circuits 126, 128. The combiner circuit 126 combines an output signal from the multiple add/subtract circuit 110 with a real signal received from the receiver filter outputs. Similarly the output of the add/subtract circuit 112 is combined with a imaginary signal from the received filter outputs, by the combiner circuit 128. The output signals from the combiners 126, 128 are applied to an adder circuit 130, the output of which is applied to an input of an even or odd bit accumulator for the particular bit position via a switch 132. It will be appreciated that there is an even/odd bit accumulator 134 for each bit position to be processed. A control odd/even signal is received on line 136 and is used to control the operation of the switch 132 which in turn selects whether the even/odd bit accumulator is selected for that bit position, and is also used to control the multiple add/subtractor circuits 110, 112.

An output from each of the accumulators is also fed back to the adder circuit 130 via a switch 133, the switch being controlled by the signal received on line 136.

The combiner/despreader described above with respect to Figure 20 may be applied to a receiver for an ordinary spread spectrum signal, and is described in GB-A-2 295 527.

Referring back to Figure 20, unlike the operation of the combiner/despreader for full spread spectrum, only a small subset of channel estimates need to be added together for multiplication by the received sample.

For samples received during any sub interval, a maximum of three chips can have contributed to the current sample. These chips correspond to one in the current sub interval and one in both of the previous two sub intervals, and because of the randomisation in chip positions it is quite possible for two chips to have been transmitted closely in time. Thus for a bank of channel estimates spanning a period of one sub interval it must be possible to read out (for addition/subtraction) a maximum of two estimates. However, the delay spread under consideration spans two sub intervals. Thus the channel estimates are divided into two banks, each covering the period of one sub interval and each having two buses. Explicit control is required to determine which bus will feed the adders. This is achieved by arranging for "Odd" and "Even" control circuits consisting of the shift registers 100, 102. In a similar way to the pilot matched filter, the chip position relevant to the receiver concerned is set as a '1' in the top part of the shift register. However, the chips for alternate frames are placed in the left hand and then the right hand registers. This has the effect that the channel estimates corresponding to the chips in alternate sub intervals are routed alternately via the lower and the upper bus drivers 107, 105. In this way it is possible for two channel estimates closer than a sub interval apart to become combined. A total of four buses for the real channel estimates and another four for the imaginary channel estimates feed the multiple adder/subtractor circuits 110, 112. Although no more than three of these will ever be active at any given time, flexibility requires that they are all present.

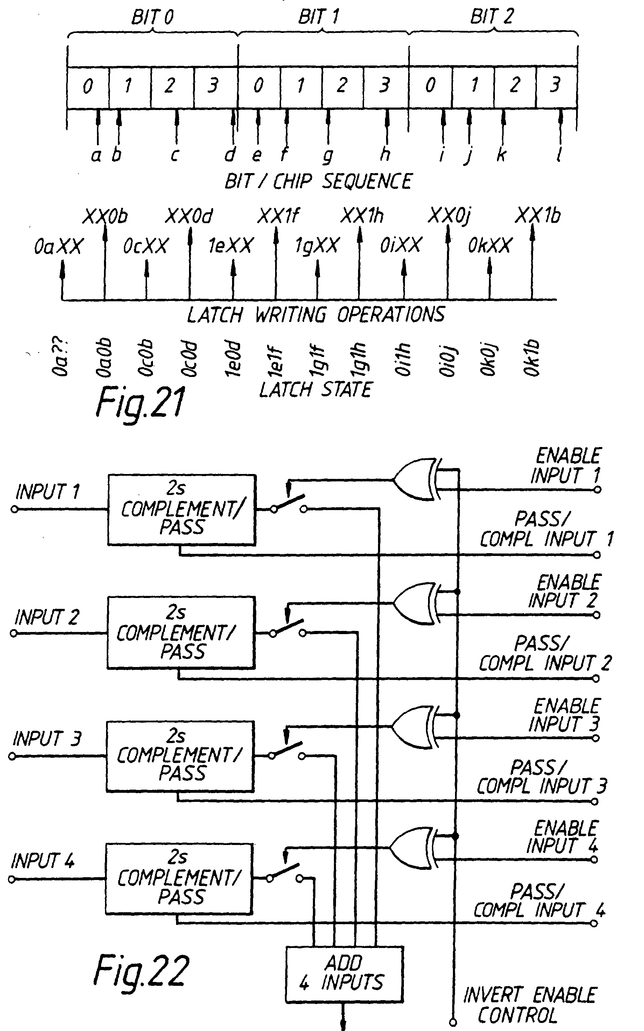

Note that the control exercised from the shift registers 100 on the left hand side is independent of the chip polarity and also irrespective of which bit any particular estimate is contributing to. Thus the left hand side circuitry merely controls the enabling of the buses. Further control over addition/subtraction is exerted by the circuitry on the right hand side. At the same time as a chip timing is set up on the left hand side, the corresponding chip polarity and bit reference is latched into the relevant circuits in a 4 off latch circuit 109. It is held there until the next time that Even or Odd chip is updated, ie it is held for two sub intervals. Thus the sequencing is as shown in Figure 21.

Referring to Figure 21, the top diagram shows a set of sub intervals over several bits with the relevant chips for a particular terminal indicated by letter. At the start of the first sub frame in Bit 0, the sub frame number is even so the even bits are updated. This is shown in the "Latch Writing Operations" diagram. Each character in the groups represents, in order, the corresponding input to the latch circuit 109 in Figure 20. An X indicates that the corresponding latch position is not updated. Thus for the first update, the first bit is set to zero (assuming the convention then 0 = Even Bit, 1 = Odd Bit) and the second bit is set according to the polarity of chip 'a'. At the start of the next sub interval the Even bits are left unaltered and the odd bits updated. The Bit number is still even so the first of the pair is still '0'. The second of the pair is set according to the polarity of chip 'b' and so on. The "Latch State" diagram indicates, the overall effect of these changes. The functionality of the "Multiple Add/Subtract" circuits 110, 112 Figure 20, is illustrated in Figure 22.

Referring to Figure 22, it must be stressed that this diagram serves merely to clarify the functionality of the element. A much more efficient highly integrated implementation would be generated in practice. The operation of the circuit of Figure 20 can now be further clarified by reference to this Figure 22. Figure 22 illustrates the multiple add/subtract circuit 110. The circuit 112 is a mirror image. Examination of the control inputs to these elements in Figure 20 will indicate that the "Pass/Compl inputs are controlled by the chip values (ie the relevant channel estimate is inverted if the chip is a "0" and not otherwise). The enabling of inputs to the final adder is controlled by the bit reference lines (ie stored versions of "Even/Odd Bit for Even Sub Interval" and Even/Odd Bit for Odd Sub Interval") in conjunction with the "Invert Enable Control" line which is driven by the "Control Odd/Even " line 136 (Figure 20). Thus, when the "Control Odd/Even" line is low, the correct channel estimates will be suitably accumulated for the "Odd" bit; when the "Control Odd/Even" line is high, the correct channel estimates will be suitably accumulated for the "Even" bit. This line will take both values once for every chip sample in order to provide accumulations for both odd and even bits. Once generated, the accumulations are multiplied by the received samples and then accumulated into the appropriate bit. Finally, when the last sample which can contribute to a particular bit has been processed, the contents of the bit accumulator are read out for demodulation and the accumulator is reset to zero.

## Claims

1. A CDMA cellular mobile radio system comprising at least one base station (4) and at least one mobile terminal arranged to communicate with said at least one base station (4) over a radio medium, the base station (4) including a transmitter for transmitting transmissions to said at least one mobile terminal, said transmissions comprising serially transmitted chips in time division multiplex fashion which are time separated and therefore inherently orthogonal thereby eliminating mutual interference; **characterised in that** the transmitter serially transmits chips to different mobile terminals which are time scrambled within a bit period.

2. A system according to claim 1, wherein the transmitter transmits in the form of binary phase shift keying signals on an inphase component of the signal, and other transmissions occur on a quadrature phase component of the signal.

3. A system according to claim 2, wherein the receiver includes a pilot matched filter having an adder/subtractor circuit (14; 48, 50) associated with each output register (16; 44, 46) provided for each correlation, each adder/subtractor circuit (14; 48, 50) being controlled by a respective control shift register (10, 12; 40, 42) arranged to receive input signals corresponding to chip positions.

4. A system according to claim 3, wherein said adder/subtractor circuits (14; 48, 50) receive a baseband input signal via a bandpass filter (20; 60, 62).

5. A system according to claim 4, wherein the baseband signal is a complex baseband signal and each control shift register (40) is arranged to control each adder/subtractor circuit (48, 50) for the pilot chip positions in a real code of the complex baseband signal, and a further pair of control shift registers (42) are provided for the pilot chip positions in an imaginary code of the baseband signal.

6. A system according to claim 5, wherein the output signals generated by each correlator are applied to a first bank of register means (106) for storing channel estimates in respect of the real code channel estimates and a second bank of register means (108) for storing channel estimates in respect of the imaginary code channel estimates, said first and second banks of register means (106, 108) being respectively controlled by first and second register means (100, 102) each holding information relating to even and odd chip positions respectively.

7. A system according to claim 6, wherein said channel estimates contained in said first and second bank of register means (106, 108) are applied to first and second adder/subtractor means (110, 112) for performing add/subtract operations on the real and imaginary channel estimates respectively.

8. A system according to claim 7, wherein an output from each of said first and second adder/subtractor means (110, 112) is applied to respective combining means (126, 128) for combining with an inphase and a quadrature phase signal respectively.

9. A system according to claim 8, wherein an output signal from each combining means (126, 128) is applied to an adder (130), the output from which is applied to an even bit or an odd bit accumulator (134) associated with the current bit.

10. A system according to claim 9, wherein the adder (130) receives an output generated from said odd or even bit accumulator (134) at a further input thereof.

11. A system according to any one of the preceding claims, wherein the transmitter transmits a pilot signal by sending some chips in a sub frame as known chips so that they can be despread in a known fashion to attain a channel estimate.

12. A system according to any one of the preceding claims, wherein power control is provided by means which arrange for links to have a variable number of chips per bit which vary in time, the variation serving as power control.

## Patentansprüche

1. CDMA-Zellenmobilfunksystem, das wenigstens eine Basisstation (4) und wenigstens ein mobiles Endgerät, das so beschaffen ist, daß es mit der wenigstens einen Basisstation (4) über ein Funkmedium kommuniziert, umfaßt, wobei die Basisstation (4) einen Sender zum Senden von Übertragungen an das wenigstens eine mobile Endgerät enthält, wobei die Übertragungen Chips umfassen, die im Zeitmultiplex seriell gesendet werden und zeitlich getrennt sind und daher inhärent orthogonal sind, wodurch eine gegenseitige Störung beseitigt wird; **dadurch gekennzeichnet, daß** der Sender Chips, die innerhalb einer Bitperiode zeitlich verschachtelt sind, seriell an verschiedene mobile Endgeräte sendet.

2. System nach Anspruch 1, bei dem der Sender in Form binär phasenumgetasteter Signale auf einer phasengleichen Komponente des Signals sendet und andere Übertragungen auf einer um 90° phasenverschobenen Komponente des Signals erfolgen.

3. System nach Anspruch 2, bei dem der Empfänger ein vorangepaßtes Filter enthält, das eine Addierer/Subtrahierer-Schaltung (14; 48, 50) besitzt, die jedem Ausgangsregister (16; 44, 46), die für die jeweiligen Korrelationen vorgesehen sind, zugeordnet ist, wobei jede Addierer/Subtrahierer-Schaltung (14; 48, 50) durch ein entsprechendes Steuerschieberegister (10, 12; 40, 42) gesteuert wird, das so beschaffen ist, daß es Eingangssignale entsprechend Chippositionen empfängt.

4. System nach Anspruch 3, bei dem die Addierer/Subtrahierer-Schaltungen (14; 48, 50) über ein Bandpaßfilter (20; 60, 62) ein Grundband-Eingangssignal empfangen.

5. System nach Anspruch 4, bei dem das Grundbandsignal ein komplexes Grundbandsignal ist und jedes Steuerschieberegister (40) so beschaffen ist, daß es jede Addierer/Subtrahierer-Schaltung (48, 50) für die Vor-Chippositionen in einem realen Code des komplexen Grundbandsignals steuert, und bei dem ferner für die Vor-Chippositionen in einem imaginären Code des Grundbandsignals ein Paar Steuerschieberegister (42) vorgesehen sind.

6. System nach Anspruch 5, bei dem die Ausgangssignale, die von jedem Korrelator erzeugt werden, in eine erste Bank aus Registermitteln (106) zum Speichern von Kanalschätzungen in bezug auf Kanalschätzungen des realen Codes und in eine zweite Bank aus Registermitteln (108) zum Speichern von Kanalschätzungen in bezug auf Kanalschätzungen des imaginären Codes eingegeben werden, wobei die ersten und zweiten Bänke aus Registermitteln (106, 108) durch erste bzw. zweite Registermittel (100, 102) gesteuert werden, wovon jedes Informationen über geradzahlige bzw. ungeradzahlige Chippositionen hält.

7. System nach Anspruch 6, bei dem die in der ersten und in der zweiten Bank aus Registermitteln (106, 108) enthaltenen Kanalschätzungen in erste bzw. zweite Addierer/Subtrahierer-Mittel (110, 112) eingegeben werden, um Additions/Subtraktions-Operationen an den realen bzw. imaginären Kanalschätzungen auszuführen.

8. System nach Anspruch 7, bei dem ein Ausgang von jedem der ersten und zweiten Addierer/Subtrahierer-Mittel (110, 112) in entsprechende Kombinationsmittel (126, 128) eingegeben wird, um mit einem phasengleichen bzw. einem um 90° phasenverschobenen Signal kombiniert zu werden.

9. System nach Anspruch 8, bei dem ein Ausgangssignal von jedem Kombinationsmittel (126, 128) in einen Addierer (130) eingegeben wird, dessen Ausgang in einen Akkumulator (134) für geradzahlige Bits oder ungeradzahlige Bits, der dem momentanen Bit zugeordnet ist, eingegeben wird.

10. System nach Anspruch 9, bei dem der Addierer (130) an einem weiteren seiner Eingänge ein Ausgangssignal empfängt, das von dem Akkumulator (134) für ungeradzahlige Bits oder für geradzahlige Bits erzeugt wird.

11. System nach einem der vorhergehenden Ansprüche, bei dem der Sender ein Vorsignal sendet, indem er einige Chips in einem Unterrahmen als bekannte Chips sendet, so daß sie in bekannter Weise entspreizt werden können, um eine Kanalschätzung zu erhalten.

12. System nach einem der vorhergehenden Ansprüche, bei dem die Leistungssteuerung durch Mittel geschaffen wird, die Verbindungsglieder so anordnen, daß sie eine veränderliche Anzahl von Chips pro Bit, die sich zeitlich ändert, besitzen, wobei die Änderung als Leistungssteuerung dient.

## Revendications

1. Système radio mobile cellulaire CDMA comportant au moins une station de base (4) et au moins un terminal mobile conçu pour communiquer avec ladite au moins une station de base (4) sur un support radio, la station de base (4) comportant un émetteur pour émettre des transmissions vers ledit au moins un terminal mobile, lesdites transmissions comportant des éléments transmis en série d'une manière multiplexée par répartition dans le temps qui sont séparés dans le temps et par conséquent orthogonaux par nature en éliminant ainsi une interférence mutuelle, **caractérisé en ce que** l'émetteur émet en série des éléments vers différents terminaux mobiles qui sont brouillés dans le temps dans une période de bit.

2. Système selon la revendication 1, dans lequel l'émetteur émet sous forme de signaux modulés par déplacement de phase bivalente sur une composante en phase du signal, et d'autres transmissions ont lieu sur une composante en quadrature de phase du signal.

3. Système selon la revendication 2, dans lequel le récepteur comporte un filtre adapté pilote ayant un circuit additionneur/soustracteur (14 ; 48, 50) associé à chaque registre d'entrée (16 ; 44, 46) fourni pour chaque corrélation, chaque circuit additionneur/soustracteur (14 ; 48, 50) étant commandé par un registre à décalage de commande respectif (10, 12 ; 40, 42) conçu pour recevoir des signaux d'entrée correspondant à des positions d'élément.

4. Système selon la revendication 3, dans lequel lesdits circuits additionneurs/soustracteurs (14 ; 48, 50) reçoivent un signal d'entrée en bande de base via un filtre passe-bande (20 ; 60, 62).

5. Système selon la revendication 4, dans lequel le signal en bande de base est un signal en bande de base complexe et chaque registre à décalage de commande (40) est conçu pour commander chaque circuit additionneur/soustracteur (48, 50) pour les positions d'élément pilote dans un code réel du signal en bande de base complexe, et une autre paire de registres à décalage de commande (42) est fournie pour les positions d'élément pilote dans un code imaginaire du signal en bande de base.

6. Système selon la revendication 5, dans lequel les signaux de sortie générés par chaque corrélateur sont appliqués à une première batterie de moyens de registre (106) pour mémoriser des estimations de canal par rapport aux estimations de canal de code réel et une seconde batterie de moyens de registre (108) pour mémoriser des estimations de canal par rapport aux estimations de canal de code imaginaire, lesdites première et seconde batteries de moyens de registre (106, 108) étant commandées respectivement par des premier et second moyens de registre (100, 102) maintenant chacun des informations concernant des positions d'éléments pair et impair, respectivement.

7. Système selon la revendication 6, dans lequel lesdites estimations de canal contenues dans lesdites première et seconde batteries de moyens de registre (106, 108) sont appliquées à des premiers et seconds moyens additionneurs/soustracteurs (110, 112) pour effectuer des opérations d'addition/soustraction sur les estimations de canal réelle et imaginaire, respectivement.

8. Système selon la revendication 7, dans lequel une sortie provenant de chacun desdits premiers et seconds moyens additionneurs/soustracteurs (110, 112) est appliquée à des moyens de combinaison respectifs (126, 128) pour une combinaison avec un signal en phase et un signal en quadrature de phase, respectivement.

9. Système selon la revendication 8, dans lequel un signal de sortie provenant de chacun des moyens de combinaison (126, 128) est appliqué à un additionneur (130), dont la sortie est appliquée à un accumulateur de bit pair ou de bit impair (134) associé au bit courant.

10. Système selon la revendication 9, dans lequel l'additionneur (130) reçoit une sortie générée par ledit accumulateur de bit impair ou pair (134) au niveau d'une autre entrée de celui-ci.

11. Système selon l'une quelconque des revendications précédentes, dans lequel l'émetteur émet un signal pilote en envoyant certains éléments dans une sous-trame en tant qu'éléments connus, de manière à supprimer l'étalement de ceux-ci d'une manière connue pour obtenir une estimation de canal.

12. Système selon l'une quelconque des revendications précédentes, dans lequel la commande de puissance est fournie par des moyens qui s'arrangent pour que des liaisons aient un nombre variable d'éléments par bit qui varie dans le temps, la variation servant en tant que commande de puissance.
